# EUROPEAN PATENT APPLICATION

(11) **EP 1 441 407 A2**
(43) Date of publication of application: **28.07.2004**
(21) Application number: 03027729.7
(22) Date of filing: 02.12.2003
(51) Int. Cl.: H01M 8/04

(54) **Functional test and demonstration apparatus for fuel cell power system**

(30) Priority: 09.12.2002 CN 02155518
(71) Applicant: Asia Pacific Fuel Cell Technologies, Ltd., Chunan, Miaoli 350 (TW)
(72) Inventor: Hwang, Jen-Jiang, Asia Pacific Fuel Cell Techn.Ltd, Chunan, Miaoli 350 (TW); Yang, Te-Chou, Asia Pacific Fuel Cell Techn.Ltd, Chunan, Miaoli 350 (TW)
(74) Representative: Goddar, Heinz J., Dr.

(57) **Abstract**

A functional test and demonstration apparatus for a fuel cell power system includes a control device, a fuel cell stack, at least one electric load, a hydrogen gas supply pipeline, an air supply pipeline, and a connection and display panel. The connection and display panel communicates physically and electrically with the various components of the fuel cell power system, and displays various electric parameters and hydrogen gas supply and air supply conditions during operation of the fuel cell power system, facilitating the performance of a functional test or demonstration of the fuel cell power system.

## Description

### BACKGROUND OF THE INVENTION

### 1. Field of the Invention

The present invention relates generally to a fuel cell power system, and in particular to a functional test and demonstration apparatus for a fuel cell power system.

### 2. Description of the Prior Art

A fuel cell is a power-generating unit that generates electrical energy through electrochemical reaction of hydrogen and oxygen. The fuel cell has the advantages of high energy conversion efficiency, clean exhaust gas, low noise, and non-use of conventional fuels, as compared with a conventional internal combustion engine. In the past few years, it has been highly promoted and developed worldwide.

Fuel cell is classified based on the electrolyte thereof. Among these known fuel cells, the proton exchange membrane fuel cell (PEMFC) is the best-developed technique, having the advantages of low operation temperature, fast start-up and high power density. As a whole, PEMFC has high value for industry.

For the purposes of performing functional tests in the course of research, quality control and maintenance, a fuel cell power system is assembled by physically and electrically connecting a fuel cell stack with other components. Moreover, in promotion of new product, exhibition or training of workers, either demonstrators or users have to repeatedly set up the pipelines and electrical connections among the various components of the fuel cell power system in order to illustrate the operation principle and demonstrate the functions of the fuel cell power system to consumers or trainees.

However, there is no appropriate apparatus in the market that can facilitate the performance of functional tests or demonstrations of a fuel cell power system. It is not easy for the users to clearly understand the features of the fuel cell power system. Moreover, to perform functional tests in the course of research, quality control and maintenance, researchers and technicians often spend a lot of time in setting up and testing the pipelines and electrical connections among various components of a fuel cell power system.

It is thus desired to provide a functional test and demonstration apparatus for a fuel cell power system, which is easy to be operated and simple to be connected.

### SUMMARY OF THE INVENTION

An object of the present invention is to provide a functional and demonstration apparatus for a fuel cell power system. It is simple to set up the piping system and electrical connections, and therefore the preparation work before performance of a function test or demonstration for the fuel cell power system is highly simplified.

Another object of the present invention is to provide a functional and demonstration apparatus for a fuel cell power system. With the assistance of the apparatus, the operation principle, electrical characteristics and conditions of gas supplies are clearly displayed.

A further object of the present invention is to provide a functional test and demonstration apparatus with a friendly connection and display panel. By means of the connection and display panel, the piping system, various electrical parameters and gas supply conditions during operation of the fuel cell power system are clearly displayed.

To achieve the above objects, in accordance with the present invention, there is provided a fuel cell power system with a functional test and demonstration apparatus. The fuel cell power system comprises a control device, a fuel cell stack, at least one load, a hydrogen gas supply pipeline, an air supply pipeline and a connection and display panel. The connection and display panel communicates physically and electrically with the various components, and displays the various electric parameters and hydrogen gas supply and air supply conditions at operation. Accordingly, it highly simplifies the assembly work of the fuel cell power system and facilitates the performance of a functional test or demonstration of the fuel cell power system.

### BRIEF DESCRIPTION OF THE DRAWINGS

The present invention will be apparent to those skilled in the art by reading the following description of a preferred embodiment thereof, with reference to the attached drawings, in which:

**Figure 1** is a perspective view of a functional test and demonstration apparatus constructed in accordance with a preferred embodiment of the present invention;

**Figure 2** is a block diagram of a piping system of the functional test and demonstration apparatus of the present invention;

**Figure 3** is a block diagram of a control circuit of the functional test and demonstration apparatus of the present invention; and

**Figure 4** is a front plane view showing the connection and display panel of the functional test and demonstration apparatus of **Fig. 1** according to a preferred embodiment of the present invention.

### DETAILED DESCRIPTION OF THE PREFERRED EMBODIMENTS

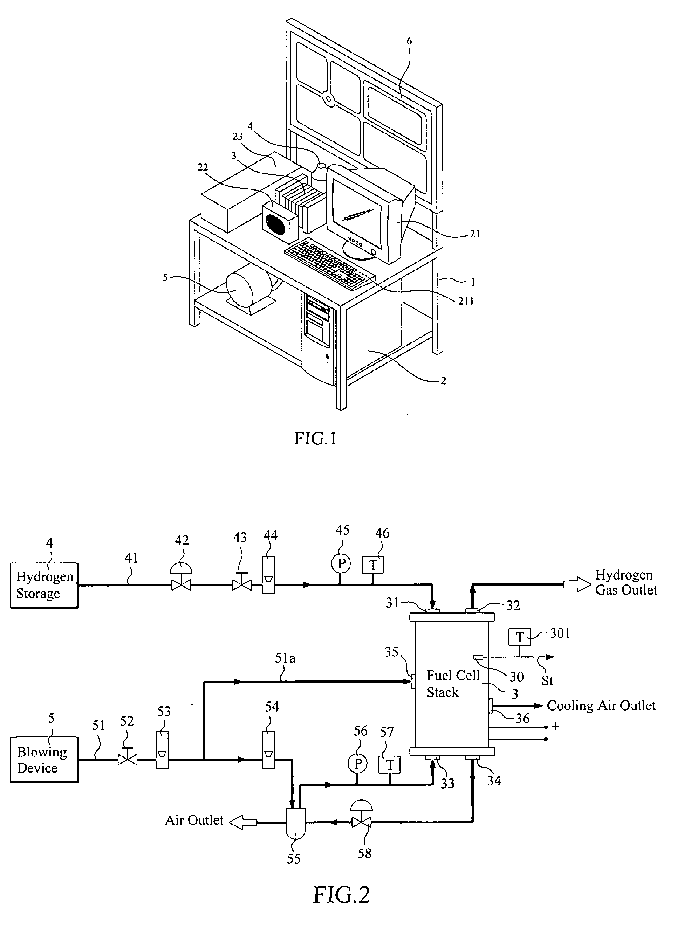

With reference to the drawings and in particular to **Figure 1**, a functional test and demonstration apparatus in accordance with the present invention is shown. The functional test and demonstration apparatus comprises a support frame **1** for supporting a control device **2**, a fuel cell stack **3**, a hydrogen storage **4**, a blowing device **5**, a display **21**, a cooling fan **22**, an electronic load **23,** and an input device **211,** and a connection and display panel **6** thereon.

The control device **2** is coupled with the display **21** and the input device **211** such as a keyboard. The cooling fan **22** is disposed near the fuel cell stack **3** for removing heat from the fuel cell stack **3**. The electronic load **23** acts as a load simulator for the fuel cell stack **3**. That is, the electronic load **23** has a feature of adjustable power consumption controllable by the control device **2**.

Hydrogen gas is supplied by the hydrogen storage **4** which may comprise an alloy based hydrogen canister, and air is drawn in by means of a blowing device **5**. Hydrogen gas and air are conveyed to the fuel cell stack for performing electrochemical reaction in the fuel cell stack.

The support frame **1** comprises a connection and display panel **6** for connection of pipelines and wires and displaying of various electric parameters and operation conditions including the voltage, current, hydrogen gas supply, air supply of the fuel cell power system in operation. The detailed functions of the connection and display panel **6** will be discussed later.

**Fig. 2** is a block diagram showing a piping system of the fuel cell power system. The fuel cell stack **3** comprises a plurality of membrane electrode assemblies (MEA). Each of the membrane electrode assemblies includes an anode catalyst layer, a proton exchange membrane and a cathode catalyst layer, forming a basic unit for performing electrochemical reaction. A plurality of membrane electrode assemblies are stacked and combined with gas diffusion layers and bipolar plates to form a cell stack. The cell stack is then mounted with current collectors and endplates at the two ends thereof to form a fuel cell stack **3**. All the membrane electrode assemblies are electrically connected in series or in parallel to generate a D.C. power having predetermined voltage value and current value. The power is supplied to the electronic load **23** via a positive terminal (+) and a negative terminal (-).

To perform electrochemical reaction for generation of power, the fuel cell stack **3** requires a continuous and sufficient supply of hydrogen gas and air. Hydrogen gas is supplied by the hydrogen storage **4** which may comprise an alloy based hydrogen canister or other hydrogen supply device. Hydrogen gas is conducted from the hydrogen storage **4** via a hydrogen gas supply pipeline **41** to a hydrogen gas inlet **31** of the fuel cell stack **3**. The hydrogen gas supply pipeline **41** comprises a pressure regulating device **42**, a flow regulating valve **43**, a flow meter **44**, a pressure gauge **45** and a thermometer **46**. The pressure regulating device **42**, which may comprise a pressure reducing valve, is used to regulate and reduce the pressure of hydrogen gas. The flow regulating valve **43**, which is mounted behind the pressure regulating device **42**, regulates a flow rate of hydrogen gas, and the flow rate is measured by the flow meter **44**. The pressure gauge **45** measures and indicates the pressure of hydrogen gas, and the thermometer **46** measures and indicates a temperature of hydrogen gas.

Hydrogen gas supplied by the hydrogen storage **4** is conveyed to the fuel cell stack **3** via the hydrogen gas inlet **31** to perform electrochemical reaction therein. Excessive hydrogen gas is conducted to flow out from a hydrogen gas outlet **32**.

Moreover, air is drawn in by the blowing device **5** which may comprise a blower. Air is then supplied to an air inlet **33** of the fuel cell stack **3** by an air supply pipeline **51**. The air supply pipeline **51** comprises a flow regulating valve **52** for regulating a flow rate of air drawn in by the blowing device **5** and a flow meter **53** for measuring a total influx flow rate of air. The flow regulating valve **52** may comprise a needle valve.

The air supply pipeline **51** comprises a flow meter **54**, a humidifier **55**, a pressure gauge **56** and a thermometer **57**. The flow meter **54** measures a flow rate of air supplied to the fuel cell stack **3** for performing electrochemical reaction. The reaction air is humidified by the humidifier **55** before flowing into the fuel cell stack **3** so that the reaction air contains an appropriate amount of moisture which is important for the normal operation of the fuel cell stack **3**. Moreover, the pressure gauge **56** and thermometer **57** respectively measure and indicate the pressure and temperature of the reaction air flowing to the fuel cell stack **3**.

Reaction air is conveyed to the fuel cell stack **3** via the air inlet **33** to perform electrochemical reaction therein. Excessive air is conducted to flow out from the fuel cell stack **3** via an air outlet **34**. The pressure of the excessive air is controlled and regulated by a pressure regulating device **58**.

Furthermore, a part of the air drawn in by the blowing device **5** is conveyed directly by a cooling air supply pipeline **51a** via a cooling air inlet **35** to the fuel cell stack **3** and then flows out from a cooling air outlet **36**. By means of the flow regulating valve **52**, the main flow rate of air in the air supply pipeline **51** and the flow rate of cooling air in the cooling air supply pipeline **51a** are regulated simultaneously. The flow rate of the cooling air increases as the main flow rate of the air supply increases, and thereby sufficient cooling air are provided to effectively remove heat from the fuel cell stack when the fuel cell stack is operated at high performance.

In conventional fuel cell power system, air is drawn in by a blowing device **5** and conducted via an air supply pipeline **51** to a fuel cell stack **3**. A cooling air supply pipeline is connected directly from the blowing device **5** to the fuel cell stack **3**. A flow regulating valve is usually mounted at the air supply pipeline **51** to control and regulate the flow rate of reaction air to the fuel cell stack **3**. In operation, the flow rate of blowing device **5** is set to a maximum flow rate. When the flow rate of reaction air to the fuel cell stack **3** is increased, the flow rate of cooling air is reduced, and vise versa. In other words, the flow regulating valve indirectly controls the flow rate of the cooling air. Such a regulating mechanism causes an inappropriate supply of cooling air. At high performance of the fuel cell power system, supply of cooling air is insufficient and overheating of the fuel cell stack **3** is happened, while at low performance, cooling air is excessive and the fuel cell stack **3** is cooled below an appropriate operation temperature. It is apparent that the piping system of the present invention overcomes the problem.

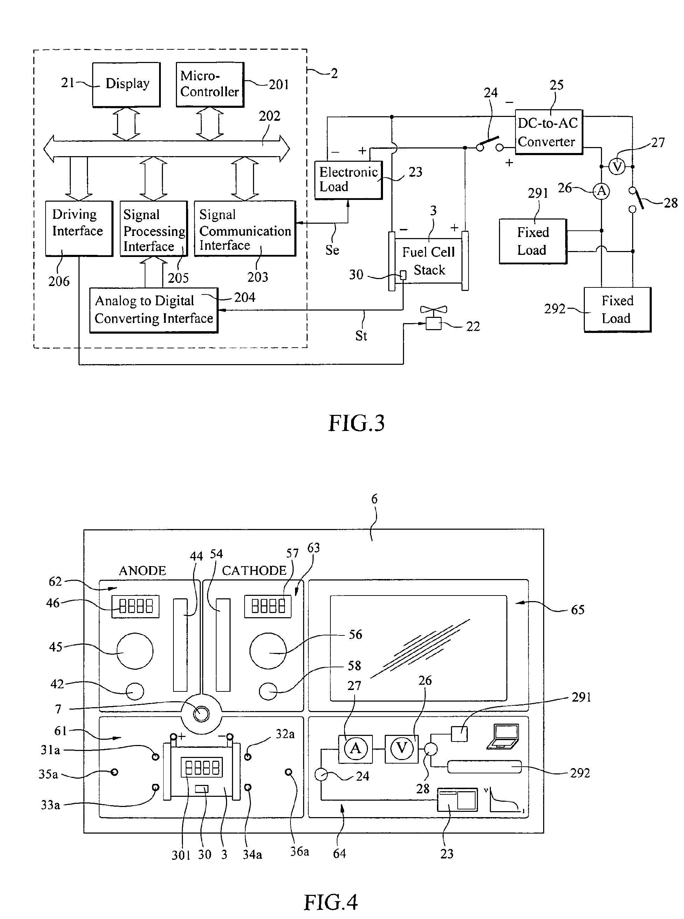

**Figure 3** is a block diagram of the control circuit of the functional test and demonstration apparatus of the present invention. A DC current is generated and supplied by the fuel cell stack **3** via a positive terminal (+) and a negative terminal (-) to the electronic load **23**. The electronic load **23** is able to simulate a loading for testing various electrical characteristics of the fuel cell stack **3**. Various electric parameters of the electronic load **23** are detected and then a plurality of signals representing the various electric parameters are transmitted via a signal transmission line Se to the control device **2** via a signal communication interface **203** which may comprise a GPIB interface or a RS232 interface. The control device **2** comprises a micro-controller **201** which is capable of controlling and setting the electronic load **23** via a bus **202**, the signal communication interface **203** and the signal transmission line Se.

The fuel cell stack **3** also comprises a temperature sensor **30** for measuring a temperature of the fuel cell stack **3** and transmits a temperature signal via a signal transmission line St to an analog to digital converting interface **204**. The analog temperature signal is converted into a digital temperature signal by the analog to digital converting interface **204** and then transmitted to a signal processing interface **205** of the control device **2**. The control device **2** also comprises a driving interface **206** which controls the turn on or off of the cooling fan **22** in order to maintain the fuel cell stack **3** at an appropriate temperature.

The DC current generated by the fuel cell stack **3** may also be supplied to a DC-to-AC converter **25** via a power supply loop and a switch **24** and converted into an alternating current. The power supply loop comprises an ammeter **26** and a voltmeter **27** for respectively measuring a current and a voltage of the alternating current. The alternating current is supplied as working power via a switch **28** to two loads **291, 292** which have constant power values.

Please refer to **Figure 4** which shows a connection and display panel of the functional test and demonstration apparatus in accordance to a preferred embodiment of the present invention. The connection and display panel **6** is mainly divided into five regions, namely a fuel cell stack and gas supply connection region **61**, an anode gas supply region **62**, a cathode gas supply region **63**, a load display region **64** and an auxiliary display region **65**.

Various detecting and regulating devices and pipelines of the fuel cell power system are connected to the connection and display panel **6** which provides a plurality of joints for connection of the components. Each of the joints bears the same reference number corresponding to the connecting components.

The fuel cell stack and gas supply connection region **61** comprises a plurality of joints for connection to various gas inlets, gas outlets and the temperature sensor of the fuel cell stack **3**. In a preferred embodiment of the present invention, the fuel cell stack and gas supply connection region **61** comprises a joint **31a** for connecting to the hydrogen gas inlet **31** of the fuel cell stack **3,** a joint **32a** for connecting to the hydrogen gas outlet **32** of the fuel cell stack **3,** a joint **33a** for connecting to the air inlet **33** of the fuel cell stack **3,** a joint **34a** for connecting to the air outlet **34** of the fuel cell stack **3,** a joint **35a** for connecting to the cooling air inlet **35** of the fuel cell stack **3,** a joint **36a** for connecting to the cooling air outlet **36** of the fuel cell stack **3,** and a joint **30a** for connecting to the temperature sensor **30.** A temperature indicator **301** is arranged on the fuel cell stack and gas supply connection region **61** for indicating the operating temperature of the fuel cell stack **3**.

The pressure regulating device **42**, the flow meter **44**, the pressure gauge **45** and the thermometer **46** are arranged on the anode gas supply region **62** for indicating and/or regulating the various parameters of the hydrogen gas supply pipeline **41**. Similarly, the flow meter **54**, the pressure gauge **56**, the thermometer **57**, and the pressure regulating device **58** are arranged on the cathode gas supply region **63** for indicating and/or regulating the parameters of the air supply pipeline **51.** In addition, an emergency button **7** is arranged at an appropriate position of the connection and display panel **6** for terminating the whole fuel cell power system in case of emergency.

The load display region **64** is provided with a plurality of indicating units respectively representing the electronic load **23**, the switch **24**, the ammeter **26**, the voltmeter **27**, the switch **28**, the first fixed load **291**, and the second fixed load **292**.

The auxiliary display region **65** enables the display of additional systems or parts. For example, the piping system and the control circuit of the fuel cell power system may be displayed on the auxiliary display region **65**. Of course, the auxiliary display region **65** may also comprise other functions according to the training course or demonstration objectives.

From the preferred embodiment, it is noted that the present invention comprises a systemized arrangement of components and parts for comprehensive understanding of the operation principle or functional testing of the fuel cell power system. All components can be easily connected and assembled. Various detecting or regulating devices are directly arranged on the connection and display panel, making it very easy for reading of parameters or regulation. Moreover, through the control device, the electric parameters of the load can be varied for testing the electrical characteristics of the fuel cell stack. By means of the present invention, the functional tests or demonstrations of a fuel cell power system can be easily and simply performed. In short, the functional and demonstration apparatus of the present invention highly facilitates and assists the illustration of operation principle and performance of functional tests at training of workers, exhibition, and product promotion of a fuel cell power system.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A functional test and demonstration apparatus for a fuel cell power system comprising:
a control device, for controlling the fuel cell power system and receiving at least one signal from the fuel cell power system;
a fuel cell stack having a hydrogen gas inlet, a hydrogen gas outlet, an air inlet, an air outlet, and a pair of output terminals for supplying a DC output voltage;
a load system, which comprises at least one electronic load connected to the output terminals of the fuel cell stack;
a hydrogen gas supply pipeline for conduction of a hydrogen gas from a hydrogen gas storage to the hydrogen gas inlet of the fuel cell stack;
an air supply pipeline for conduction of an air source from a blowing device to the air inlet of the fuel cell stack; and
a connection and display panel, which comprises a plurality of joints for connecting the control device, the fuel cell stack, the load system, the hydrogen gas supply pipeline and the air supply pipeline, and a plurality of indicating units being arranged on the connection and display panel for indicating an operation of the fuel cell stack.

2. The functional test and demonstration apparatus as claimed in Claim 1, wherein the load system comprises at least one electronic load with an adjustable power consumption.

3. The functional test and demonstration apparatus as claimed in Claim 2, wherein the electronic load is connected to the control device through a signal communication interface, so that the electronic load is controllable by the control device through the signal communication interface.

4. The functional test and demonstration apparatus as claimed in Claim 1, wherein the load system comprises at least one fixed load with a fixed power consumption.

5. The functional test and demonstration apparatus as claimed in Claim 4, wherein the load system is an AC electric load, and the functional test and demonstration apparatus further comprising a DC-to-AC converter for converting the DC output voltage supplied by the fuel cell stack into an AC output voltage for supplying to the AC electric load.

6. The functional test and demonstration apparatus as claimed in Claim 1, wherein the fuel cell stack comprises a temperature sensor for detecting a temperature of the fuel cell stack and thereby transmitting a temperature signal to the control device via an analog to digital converting interface.

7. The functional test and demonstration apparatus as claimed in Claim 1, wherein the hydrogen gas supply pipeline comprises a pressure regulating device for regulating a pressure of the hydrogen gas.

8. The functional test and demonstration apparatus as claimed in Claim 7, wherein the hydrogen gas supply pipeline further comprises a flow regulating valve for regulating a flow rate of hydrogen gas.

9. The functional test and demonstration apparatus as claimed in Claim 8, wherein the flow regulating valve further comprises a flow meter for measuring the flow rate of hydrogen gas.

10. The functional test and demonstration apparatus as claimed in Claim 1, wherein the hydrogen gas supply pipeline further comprises a pressure gauge for measuring a pressure of hydrogen gas.

11. The functional test and demonstration apparatus as claimed in Claim 1, wherein the hydrogen gas supply pipeline further comprises a thermometer for measuring a temperature of hydrogen gas.

12. The functional test and demonstration apparatus as claimed in Claim 1, wherein the air supply pipeline comprises a flow regulating valve for regulating a flow rate of air supplied to the fuel cell stack.

13. The functional test and demonstration apparatus as claimed in Claim 12, wherein the air supply pipeline further comprises a flow meter for measuring the flow rate of air.

14. The functional test and demonstration apparatus as claimed in Claim 13, further comprising a cooling air supply pipeline which is connected to the air supply pipeline for conducting a part of the air drawn in by the blowing device to a cooling air inlet of the fuel cell stack, the flow regulating valve of the air supply system regulating the flow rate of air to the air supply pipeline and flow rate of air to the cooling air supply pipeline simultaneously, so that the amount of cooling air increases as amount of the reaction air to the fuel cell stack increases and thereby the fuel cell stack is appropriately cooled.

15. The functional test and demonstration apparatus as claimed in Claim 1, wherein the air supply pipeline further comprises a pressure gauge for measuring a pressure of the air.

16. The functional test and demonstration apparatus as claimed in Claim 1, wherein the air supply pipeline further comprises a thermometer for measuring a temperature of the air.

17. The functional test and demonstration apparatus as claimed in Claim 1, wherein the air supply pipeline further comprises a humidifier for humidifying the air.

18. The functional test and demonstration apparatus as claimed in Claim 1, wherein the connection and display panel comprises a fuel cell stack and gas supply connection region, an anode gas supply region, a cathode gas supply region, a load display region and an auxiliary display region.
